# EUROPEAN PATENT APPLICATION

(11) **EP 3 450 628 A1**
(43) Date of publication of application: **06.03.2019**
(21) Application number: 17909963.5
(22) Date of filing: 12.12.2017
(51) Int. Cl.: E01C 13/08

(54) **ENTIRELY RECOVERABLE ARTIFICIAL TURF AND MANUFACTURING METHOD THEREOF**

(30) Priority: 15.05.2017 CN 201710337490
(71) Applicant: Cocreation Grass Co., Ltd, Huaian, Jiangsu 223232 (CN)
(72) Inventor: QIAN, Hao, Huaian Jiangsu 223232 (CN); ZHAO, Chungui, Huaian Jiangsu 223232 (CN)
(74) Representative: Vitina, Maruta
(86) International application number: PCT/CN2017/115542
(87) International publication number: WO 2018/209931

(57) **Abstract**

The present invention discloses a completely recyclable artificial turf, which solves the problem of difficult tufting of the existing artificial turf, has high tufting efficiency, has high strength of artificial turf, and is capable of being integrally recycled. The completely recyclable artificial turf of the present invention comprises artificial yarn and base fabric, wherein the base fabric includes woven fabric, the artificial yarn is tufted on the base fabric including woven fabric, the root of the artificial yarn is melted or locally melted, and the artificial yarn is integrated with the base fabric into a whole after cooling and shaping, wherein the material of the artificial yarn has a melting point lower than that of the material of the base fabric.

## Description

### TECHNICAL FIELD

The present invention relates to an artificial turf and a preparation method thereof, and particularly to a completely recyclable artificial turf and a preparation method thereof.

### BACKGROUND

Artificial turf comprises artificial yarn, base fabric and back adhesive, is mainly reflected by the artificial yarn in performance, and is praised by users in either aspect of sports turf or leisure turf because of good abrasion resistance and buffer performance, excellent weather resistance, and fresh and green appearance. Artificial yarn is mainly made of PE, PP and PA, wherein PE becomes the main material of artificial yarn because of excellent flexibility, excellent aging resistance and low cost. The base fabric mainly plays a role of fixing the artificial yarn and providing integral mechanical property of artificial turf. The artificial yarn tufted on the base fabric first, and then a layer of back adhesive is coated onto the bottom surface to fix the artificial yarn, so that the artificial yarn is integrated with the base fabric into a whole, wherein the back adhesive mainly includes Latex and PU adhesive.

For the artificial turf of the above-mentioned structure, i.e. the conventional artificial turf most widely used at present, because of the presence of the Latex or the PU adhesive, it cannot be recycled after reaching service life, and can only be landfilled or incinerated. In this way, the environment is polluted on the one hand, and a lot of raw materials are wasted on the other hand. Under the background of facing exhaustion of resources and promoting recycling, with the rapid growth of usage amount of artificial turf, the problem of recycle utilization and reuse thereof already becomes a problem required to be solved immediately, and all artificial turf manufacturers try to find methods to solve the problem, wherein the development of recyclable artificial turf already becomes a main breakthrough to solve this problem.

For the recyclable artificial turf, the core is to solve the problem of recycling of back adhesive, while replacing the traditional Latex or PU back adhesive with thermoplastic material is one of the ways to solve the problem. The patent with the publication number of CN102808368A provides a recyclable artificial turf and a preparation method thereof. EVA hot melt adhesive is heated to 160-180°C and is coated onto the PP base fabric on which the artificial yarn is tufted in a molten state, the artificial yarn is fixed through the EVA hot melt adhesive, and in the meantime, the artificial turf is integrally recycled. The patent with the publication number of CN104060518A provides another recyclable artificial turf and a preparation method thereof. The preparation method comprises: tufting artificial yarn on PP base fabric first to prepare same into a semi-finished product, then coating thermoplastic elastomers such as TPR, TPE and TPU onto the back side of the base fabric through a cast coating process to form a back adhesive layer with the thickness of 0.3-5mm, and preparing the recyclable artificial turf. In the above-mentioned two methods, the PU or Latex is replaced with the thermoplastic material, and the artificial yarn and the base fabric are fixed together thereby, although both the two methods meet the technical requirements of recycling artificial turf, but they have the following obvious defects:
(1) There are a plurality of artificial yarn on each cluster of grass, and the hot melt adhesive in molten state has high viscosity, and is difficult to permeate inside the artificial yarn clusters, causing that the artificial yarn has low withdrawal force, and the whole artificial yarn is easy to fall out from bottom during the artificial turf is used.
(2) Because the hot melt powder is fully coated on the bottom surface and the thermoplastic material is watertight, the artificial turf system needs to be drilled with drainage holes to achieve the drainage function, but the integral structure of the artificial turf may be destroyed if drilled with drainage holes, and then the mechanical property of the artificial turf may be reduced.

The patent with the publication number of CN104727202A provides a recyclable artificial turf. The preparation method comprises: tufting artificial yarn on base fabric including non-woven fabric to prepare same into a semi-finished product, then covering a layer of non-woven fabric below the semi-finished product, heating the root of the artificial yarn through the bottom-layer non-woven fabric, placing hot melt powder between the two layers of non-woven fabric, adhering the root of the artificial yarn molted by heating to the hot melt powder and fixing same between the two layers of non-woven fabric, thereby achieving the purpose of completely recycling artificial turf. Meanwhile, because the non-woven fabric has good water seepage function and the hot melt powder is not fully coated, there is clearance between the two layers of non-woven fabric, so that the artificial turf prepared using the method has good drainage performance even not being drilled with drainage holes. However, the recyclable artificial turf prepared using the method still has big problems in structure and performance, which are mainly expressed in the following two aspects:
(1) The base fabric for fixing the artificial yarn includes non-woven fabric, because of the loose structure thereof, it is difficult to perform tufting in practical application, the production efficiency is very low, and the prepared artificial turf has poor appearance quality.
(2) The loose structure of the non-woven fabric leads to poor strength of artificial turf, thus being difficult to meet the requirements of sports fields.

To sum up, the development of recyclable artificial turf at present has obvious defects in both structure and performance, which is not beneficial to mass production and popularization of new products. Therefore, there is a need to develop a novel completely recyclable artificial turf and a preparation method thereof to solve the problem existing in the prior art, thereby meeting the requirements of increasingly growing markets.

### SUMMARY

To solve the above-mentioned problem, the present invention provides a completely recyclable artificial turf. The artificial turf solves the problem of difficult tufting of the existing artificial turf, has high tufting efficiency, has high strength, and is capable of being integrally recycled.

The present invention further provides a preparation method for the completely recyclable artificial turf. The preparation method is simple, saves labor, saves cost, is convenient to operate, and is beneficial to industrialization application.

The purpose of the present invention is realized by the following technical solution:
The completely recyclable artificial turf of the present invention, comprising artificial yarn and base fabric, wherein the base fabric includes woven fabric, the artificial yarn is tufted on the base fabric including woven fabric, the root of the artificial yarn is melted or locally melted, and the artificial yarn is integrated with the base fabric into a whole after cooling and shaping, wherein the material of the artificial yarn has a melting point lower than that of the material of the base fabric. Of course, the woven fabric itself may be base fabric.

The completely recyclable artificial turf of the present invention has a further technical solution that the root of the artificial yarn is tufted artificial yarn located below the bottom surface of the base fabric.

The completely recyclable artificial turf of the present invention has a further technical solution that the root of the artificial yarn is melted or locally melted in a thermal compounding manner.

The completely recyclable artificial turf of the present invention has a further technical solution that the woven fabric is single woven fabric or compound woven fabric.

The completely recyclable artificial turf of the present invention has a further technical solution that for the base fabric, before the artificial yarn is tufted, hot melt adhesive powder is spread on the bottom surface of the base fabric through a powder spreading procedure; has a further technical solution that the base fabric also includes mesh fabric; and has a further technical solution that the material of the mesh fabric has a melting point higher than that of the material of the artificial yarn, and the mesh fabric should be heat-treated before use. The heat treatment method for the mesh fabric or the non-woven fabric is as follows preferably: heating the mesh fabric or the non-woven fabric in the mode of thermal radiation by an oven or direct heating by a heating roller, controlling the heating temperature between the glass transition temperature and the melting point of the material, and completing heat treatment of the mesh fabric or the non-woven fabric after cooling and shaping. The material is polyethylene terephthalate preferably, and the heating temperature ranges from 170°C to 200°C preferably.

The completely recyclable artificial turf of the present invention has a further technical solution that the gram weight of the mesh fabric is 50-200g/m², and the material of the mesh fabric is polyethylene terephthalate preferably.

The completely recyclable artificial turf of the present invention has a further technical solution that an additional layer of base fabric may be thermally compounded on the bottom surface of the base fabric on which the artificial yarn is tufted; has a further technical solution that the material of the base fabric thermally compounded on the bottom surface of the base fabric on which the artificial yarn is tufted has a melting point higher than that of the material of the artificial yarn, and for the base fabric before being thermally compounded, hot melt adhesive powder is spread on one surface thereof through a powder spreading procedure; has a further technical solution that the base fabric thermally compounded on the bottom surface of the base fabric on which the artificial yarn is tufted is non-woven fabric or compound fabric of non-woven fabric and mesh fabric; has a further technical solution that the non-woven fabric or the compound fabric of non-woven fabric and mesh fabric should be heat-treated before use; has a further technical solution that the heat treatment method for the mesh fabric or the non-woven fabric is as follows: heating the mesh fabric or non-woven fabric in the mode of thermal radiation by an oven or direct heating by a heating roller, controlling the heating temperature between the glass transition temperature and the melting point of the material, and completing heat treatment of the mesh fabric or non-woven fabric after cooling and shaping; has a further technical solution that there are two heat treatment methods for the compound fabric of non-woven fabric and mesh fabric, one method is as follows: performing heat treatment on the non-woven fabric and the mesh fabric respectively in the mode of thermal radiation by an oven or direct heating by a heating roller, controlling the heating temperature between the glass transition temperature and the melting point of the material, and thermally adhering the two together through a powder spreading procedure to form the compound fabric; and the other method is as follows: stitching the non-woven fabric and the mesh fabric together first through a stitching process, then heating the compound fabric in the mode of thermal radiation by an oven or direct heating by a heating roller, controlling the heating temperature between the glass transition temperature and the melting point of the material, and completing heat treatment after cooling and shaping; and has a further technical solution that the gram weight of the non-woven fabric is 50-150g/m² preferably, the gram weight of the mesh fabric is 80-150g/m² preferably, and the material of the non-woven fabric or the mesh fabric is polyethylene terephthalate preferably. When the material of the non-woven fabric or the mesh fabric is polyethylene terephthalate, the heating temperature thereof during heat treatment ranges from 170°C to 200°C preferably.

The completely recyclable artificial turf of the present invention has a further technical solution that the material of the hot melt adhesive powder has a melting point lower than that of the material of the base fabric, preferably hot melt adhesive powder having a melting point close to or identical to that of the material of the artificial yarn, melting point close to referring that the difference between the two melting points is ± 10 °C; and has a further technical solution that the hot melt adhesive powder is prepared of one of PE, EVA and TPU or a combination thereof, and the power spreading amount of the hot melt adhesive powder is 60-150g/m².

The preparation method for the completely recyclable artificial turf of the present invention, comprising the following steps:
(1) tufting artificial yarn on base fabric including woven fabric according to specifications to prepare same into a semi-finished product; and
(2) heating the bottom of the semi-finished product through a thermal compounding procedure, so that the root of the artificial yarn is melted or locally melted, and the artificial yarn is integrated with the base fabric into a whole after cooling and shaping, thus obtaining the completely recyclable artificial turf.

The preparation method for the completely recyclable artificial turf of the present invention has a further technical solution that the preparation method comprises the following steps:
(1) spreading hot melt adhesive powder on one surface of the base fabric including woven fabric through a powder spreading procedure;
(2) tufting artificial yarn on the base fabric including woven fabric according to specifications to prepare same into a semi-finished product; and
(3) heating the bottom of the semi-finished product through a thermal compounding procedure, so that the root of the artificial yarn is melted or locally melted and is melted with the hot melt adhesive powder, and the artificial yarn is integrated with the base fabric into a whole after cooling and shaping, thus obtaining the completely recyclable artificial turf.

The preparation method for the completely recyclable artificial turf of the present invention has a further technical solution that the preparation method comprises the following steps:
(1) spreading powder on the woven fabric and the mesh fabric simultaneously through a powder spreading procedure to prepare base fabric, or spreading powder on the woven fabric first and then combining the woven fabric with the mesh fabric to prepare base fabric;
(2) tufting artificial yarn on the base fabric according to specifications to prepare same into a semi-finished product; and
(3) heating the bottom of the semi-finished product through a thermal compounding procedure, so that the root of the artificial yarn is melted or locally melted and is melted with the hot melt adhesive powder, and the artificial yarn is integrated with the base fabric into a whole after cooling and shaping, thus obtaining the completely recyclable artificial turf.

The preparation method for the completely recyclable artificial turf of the present invention has a further technical solution that the preparation method comprises the following steps:
(1) spreading a layer of hot melt adhesive powder on one surface of the non-woven fabric or the compound fabric of non-woven fabric and mesh fabric through a powder spreading procedure, to prepare bottom-layer base fabric;
(2) spreading powder on the woven fabric and the mesh fabric simultaneously through a powder spreading procedure to prepare base fabric, or spreading powder on the woven fabric first and then combining the woven fabric with the mesh fabric to prepare base fabric for tufting;
(3) tufting artificial yarn on the base fabric according to specifications to prepare same into a semi-finished product, and covering the other base fabric on which powder is spread on the bottom surface of the semi-finished product, the surface with hot melt adhesive powder of the base fabric coming into contact with the grass root; and
(4) heating the surface without hot melt adhesive powder of the bottom-layer base fabric through a thermal compounding procedure, so that the root of the artificial yarn is melted or locally melted and is adhered together with the melted hot melt adhesive powder, and the artificial yarn is integrated with the two layers of base fabric into a whole after cooling and shaping, thus obtaining the completely recyclable artificial turf.

The preparation method for the completely recyclable artificial turf of the present invention has a further technical solution that the mesh fabric, the non-woven fabric or the compound fabric of the non-woven fabric and the mesh fabric should be heat-treated before use, wherein the heat treatment method for the mesh fabric or the non-woven fabric is as follows: heating the mesh fabric or the non-woven fabric in the mode of thermal radiation by an oven or direct heating by a heating roller, controlling the heating temperature between the glass transition temperature and the melting point of the material, and completing heat treatment of the non-woven fabric and the mesh fabric after cooling and shaping; there are two heat treatment methods for the compound fabric of the non-woven fabric and the mesh fabric, one method is as follows: performing heat treatment on the non-woven fabric and the mesh fabric respectively in the mode of thermal radiation by an oven or direct heating by a heating roller, controlling the heating temperature between the glass transition temperature and the melting point of the material, and thermally adhering the two together through a powder spreading procedure to form compound fabric; and the other method is as follows: stitching the non-woven fabric and the mesh fabric together first through a stitching process, then heating the compound fabric in the mode of thermal radiation by an oven or direct heating by a heating roller, controlling the heating temperature between the glass transition temperature and the melting point of the material, and completing heat treatment after cooling and shaping; and has a further technical solution that when the material of the non-woven fabric or the mesh fabric is polyethylene terephthalate preferably, the heating temperature during heat treatment ranges from 170°C to 200°C.

The preparation method for the completely recyclable artificial turf of the present invention has a further technical solution that the powder spreading procedure is performed by heating the hot melt adhesive powder in the mode of thermal radiation by an oven or direct heating by a heating roller, so that the hot melt adhesive powder is melted to produce adhesiveness and then is adhered to the surface of the woven fabric or the non-woven fabric, or the woven fabric and mesh fabric, or the non-woven fabric and the mesh fabric are adhered together, to form a whole after cooling and shaping.

The preparation method for the completely recyclable artificial turf of the present invention has a further technical solution that the thermal compounding procedure is performed by heating the root of the artificial yarn or the surface without hot melt adhesive powder of the base fabric in the mode of thermal radiation by an oven or direct heating by a heating roller, so that the root of the artificial yarn and the hot melt adhesive powder are melted to produce adhesiveness and then are combined with each other, and the artificial yarn is firmly fixed onto the base fabric through cooling and shaping.

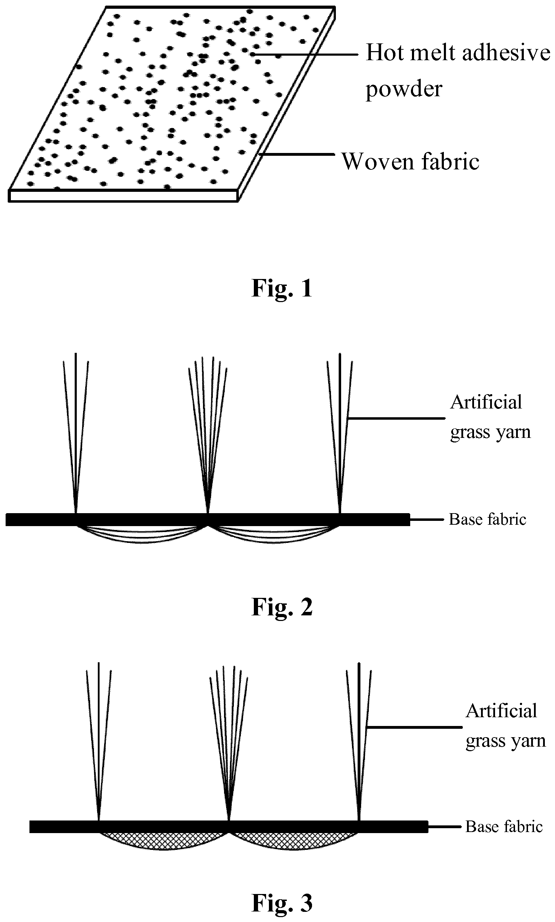

Compared with the prior art, the present invention has the following advantageous effects:
1. By using the difference between the melting points of the material of the base fabric and the material of the artificial yarn, the base fabric is not affected while the root of the artificial yarn is molted or locally molted, so that the artificial yarn is fixed onto the base fabric on the one hand, and the integrality of the artificial turf is guaranteed on the other hand.
   For the completely recyclable artificial turf of the present invention, the preparation method is as follows: heating the bottom surface of the base fabric on which the artificial yarn is tufted in the mode of thermal radiation by an oven or direct heating by a heating roller in a thermal compounding manner, melting or locally melting the root of the artificial yarn to produce adhesiveness therebetween because there are several artificial yarn on each cluster of grass, combining them together and adhering same to the base fabric, and forming a whole after cooling and shaping, thus obtaining the completely recyclable artificial turf. The preparation method determines that the material of artificial yarn should have a melting point lower than that of the material of base fabric, and the larger the difference between the melting points of the two is, the easier it is implemented. The material of the artificial yarn mainly includes PP and PE, and PE makes up the majority, so that there are two types of frequently-used woven fabric, i.e. PET woven fabric and PP woven fabric for selection. However, the popularizing rate of the PP woven fabric on the market at present is much higher than that of the PET woven fabric, so that it becomes one of the key technologies of the present invention to overcome the big difficulty in thermal compounding due to the difference between the melting points of PE and PP and keep the integrality of artificial turf.
2. The woven fabric has high mechanical strength, and strong capability to fix artificial yarn, thus solving the two problems existing in the prior art that it is difficult to tuft and the appearance of artificial turf is poor.
   The woven fabric is prepared through the procedures of wire drawing, heat treatment, warping and weaving in sequence. The procedures of wire drawing and heat treatment make the woven fabric have relatively high mechanical strength and thermal stability, and the procedures of warping and weaving make a network structure closely interlaced by warps and wefts be formed, thereby guaranteeing the capability to fix artificial yarn, thoroughly solving the problem existing in the prior art that it is difficult to tuft; meanwhile, because the tight structure thereof has no influence on the water penetration performance of fabric and the hot melt adhesive powder is distributed on the surface thereof in a point shape, the artificial turf has good drainage performance. The material frequently used by the woven fabric includes PP and PET, wherein the gram weight of the PP woven fabric ranges from 90g/m² to 200g/m² preferably, and the gram weight of the PET woven fabric ranges from 150g/m² to 350g/m² preferably.
   The compound woven fabric is prepared on the basis of the single woven fabric, is mainly prepared by means of two preparation methods, one method is as follows: needling a layer of PET staple fiber or filament fiber on the surface of the single woven fabric, and the other method is as follows: stitching a layer of PET fiber on the surface of the single woven fabric by a knit-stitch machine. PET has a relatively high melting point, has a good heat insulation effect especially when being used together with the PP woven fabric, and plays a role of protecting the PP woven fabric, thereby being able to be produced at relatively high processing temperature, and promoting productivity. Meanwhile, the hair side of the PET fiber is more beneficial to the adhesion of hot melt adhesive powder, and the frequently-used gram weight of the compound PET layer is 50-150g/m².
3. By spreading a layer of hot melt adhesive powder on the surface of the base fabric, the thermal shrinkage performance of the base fabric is improved on the one hand, and the strength for the base fabric to fix the artificial yarn is enhanced on the other hand.
   The powder spreading procedure is performed as follows: uniformly spreading hot melt adhesive powder on the surface of the base fabric first, the hot melt adhesive powder being distributed on the surface of the fabric in a point shape, then heating the hot melt adhesive powder to a molten state in the mode of thermal radiation by an oven or direct heating by a heating roller, so that the hot melt adhesive powder produces adhesiveness and then is adhered to the base fabric, to form a whole with the base fabric after cooling and shaping (as shown in Fig. 1). Moreover, it is equivalent that the base fabric experiences a heat shaping in the powder spreading process, thus improving the heat resistance of the base fabric.
   After artificial yarn is tufted on the base fabric on which powder is spread to prepare a semi-finished product, the bottom surface of the semi-finished product is heated in the mode of thermal radiation by an oven or direct heating by a heating roller, the root of the artificial yarn is melted, and meanwhile, the hot melt adhesive powder on the surface of the base fabric is also melted and is combined with the root of the artificial yarn, thereby further enhancing the capability for the base fabric to fix the artificial yarn. On the other hand, because the hot melt adhesive powder is distributed on the surface of the base fabric in a point shape, the water permeability performance of the base fabric is not affected, thereby also guaranteeing the integral water seepage performance of the artificial turf.
4. By adding the mesh fabric on which heat treatment is performed in advance into the tufted base fabric structure, the integral mechanical strength of the artificial turf is guaranteed on the one hand, and the problem of thermal shrinkage which may occur when the artificial turf is used is solved on the other hand.
   The mesh fabric has the production process basically consistent with that of the woven fabric, also experiences the procedures of wire drawing, heat shaping, warping and weaving, and is mainly different from the woven fabric in that there is clearance between the warps and wefts thereof so that a network structure is formed, the mesh size being 1×1mm-5×5mm. Because each of the warps or wefts on the mesh fabric is composed of a certain amount of PET yarn, after being subjected to wire drawing and heat shaping, these PET yarn have certain mechanical strength, so that the integral mesh fabric has high strength, and can obviously increase the strength of the artificial turf when being used together with the single or compound woven fabric. On the other hand, for the mesh fabric during weaving, when being subjected to pulling, drawing, distortion and other mechanical action, the molecular structure thereof may change. Because such deformation occurs at the temperature less than the glass transition temperature of PET (Tg = 81°C), the reserved deformation belongs to forced high elastic deformation, which cannot be recovered even if the external force is removed, and the deformation is reserved on the fiber. When being heated again (the temperature is greater than Tg), molecular motion is produced, resulting in a tendency to the minimum energy state. The macro-behavior is the thermal deformation of the mesh fabric. Therefore, before use, the PET mesh fabric should be heat-shaped, and the temperature should be controlled between Tg and Tm. In actual production, there are two heat shaping modes, i.e. a mode of thermal radiation by an oven, wherein the heating temperature is controlled between 150°C and 220 °C and the linear speed is controlled between 10m/min and 15m/min, and a mode of direct heating by a heating roller, wherein the surface temperature of the roller is controlled between 180°C and 200 °C and the linear speed is controlled between 3m/min and 7m/min.
   On the other hand, as a part of the base fabric, the mesh fabric mainly plays a role of increasing mechanical strength, and is flexibly combined with the woven fabric, that is, it may be randomly combined with the woven fabric through the thermal adhesion action of the hot melt adhesive powder after powder is spread on same and the woven fabric simultaneously, or the two are combined together by covering the mesh fabric on the woven fabric after the hot melt adhesive powder on the surface of the woven fabric is melted and then exerting a certain pressure, or the two are combined together in the process of tufting the artificial yarn. In the above-mentioned three modes, in the former two modes, the mesh fabric is tightly combined with the woven fabric, but the powder spreading procedure is relatively complicated; while in the third mode, the mesh fabric is only combined with the woven fabric through the artificial yarn, the appearance is not as good as that in the former two modes, but the operation of the powder spreading procedure of the woven fabric is relatively simple and convenient. However, none of the modes may have influence on the fixing strength of the artificial yarn and the integral strength of the artificial turf, so that the modes may be selected according to the specific situation.
5. A layer of bottom-layer base fabric is thermally compounded, to protect the bottom of the artificial turf, and reduce the requirements for the foundation of the pavement field.

The melting point of the material of the base fabric should be higher than that of the material of the artificial yarn, for example, frequently-used PET, considering the heat conduction efficiency of the base fabric, non-woven fabric of loose structure may be selected in general, and meanwhile, the base fabric may also include mesh fabric, to further enhance the integral mechanical strength of the artificial turf.

There is an adhesive layer on the bottom surface of conventional artificial turf (Latex or PU adhesive). Because the Latex has poor water resistance, the phenomenon of "adhesive falling" may occur if being immersing in water for a long time, and then a part of the root of the artificial yarn may be exposed. In actual use, the phenomenon of friction between the root of the artificial yarn and the foundation may occur. To reduce the attrition of the root of artificial yarn, general sports fields have strict requirements for the foundation during pavement, that is, the surface should be flat and smooth, to avoid affecting the service life because of serious attrition. By adding a layer of base fabric at the bottom of the artificial turf, the friction between the root of the artificial yarn and the foundation is effectively avoided, thereby reducing requirements for the field foundation, saving labor and financial resources, and reducing pavement costs.

### BRIEF DESCRIPTION OF DRAWINGS

Fig. 1 is a structural schematic diagram of base fabric after powder is spread thereon.
Fig. 2 is structural schematic diagram of a semi-finished product of a completely recyclable artificial turf of the present invention.
Fig. 3 is structural schematic diagram of a finished product of a completely recyclable artificial turf of the present invention.

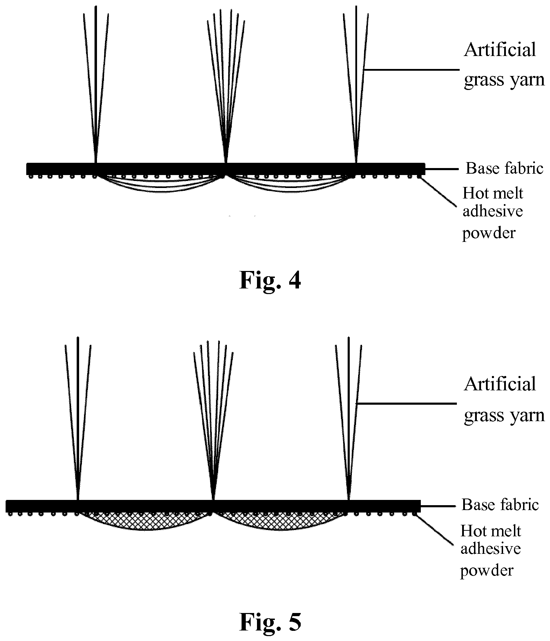

Fig. 4 is structural schematic diagram of a semi-finished product of a completely recyclable artificial turf after powder is spread on base fabric.
Fig. 5 is structural schematic diagram of a finished product of a completely recyclable artificial turf after powder is spread on base fabric.

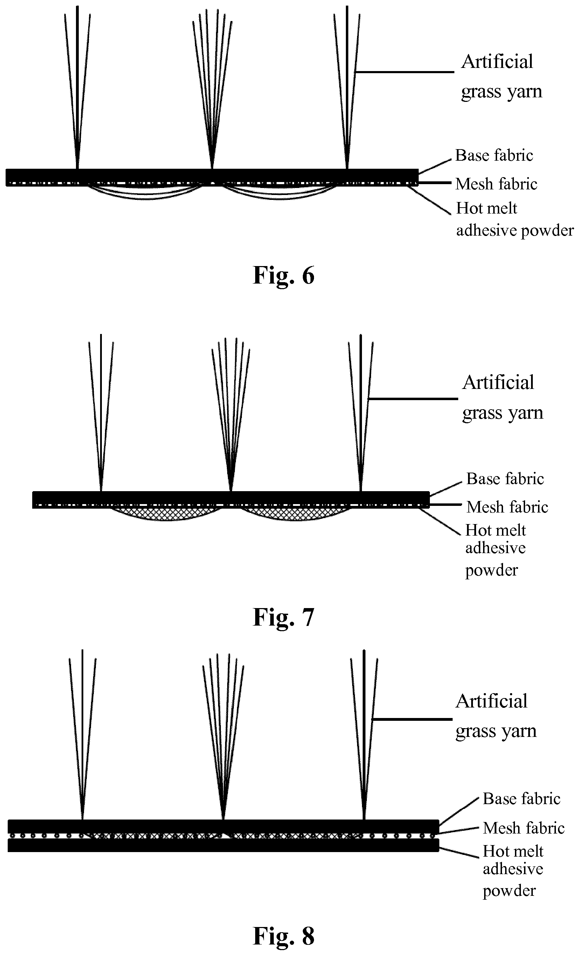

Fig. 6 is structural schematic diagram of a semi-finished product of a completely recyclable artificial turf after powder is spread on base fabric and mesh fabric is added.
Fig. 7 is structural schematic diagram of a finished product of a completely recyclable artificial turf after powder is spread on base fabric and mesh fabric is added.
Fig. 8 is structural schematic diagram of a completely recyclable artificial turf including bottom-layer base fabric.

### DETAILED DESCRIPTION

The present invention is described by means of the following embodiments. However, the present invention is not limited to these embodiments, and the following embodiments are described as follows.
1. Preparation method for artificial yarn
   (1) Uniformly mixing 50 shares of 5000S resin, 40 shares of 7042 resin, 8 shares of color master batch, and 2 shares of processing aid (including stabilizer, antioxidant, antistat, anti-blocking agent and dispersing agent); and
   (2) Controlling the extrusion temperature to be 190-230 °C, setting the draw ratio to be 5-6, controlling the oven temperature to be 95-100°C, extruding by a single screw extruder, performing wire drawing, and preparing the artificial yarn.
2. There are the following modes for heat treatment of the mesh fabric, the non-woven fabric or the compound fabric of non-woven fabric and mesh fabric:
   (1) heating by an oven: the temperature is 170-175 °C, and the linear speed is about 13m/min;
   (2) heating by an oven: the temperature is 180-185°C, and the linear speed is about 15m/min;
   (3) heating by an oven: the temperature is 185-190°C, and the linear speed is about 4.5m/min; and
   (4) heating by an oven: the temperature is 195-200°C, and the linear speed is about 7.0m/min.
3. Preparation method for control sample (CN104727202A)
   (1) Uniformly spreading PE hot melt adhesive powder on base fabric A compounded by 100g/m² of PET non-woven fabric and 80g/m² of PET mesh fabric according to the powder spreading amount of 100g/m², heating by an oven, controlling the temperature to be 170-180°C, and melting the hot melt adhesive powder to produce adhesiveness and adhering the mesh fabric and the non-woven fabric together, thus obtaining the base fabric A.
   (2) Uniformly spreading PE hot melt adhesive powder on base fabric B compounded by 80g/m² of PET non-woven fabric and 120g/m² of PET mesh fabric according to the powder spreading amount of 100g/m², heating by an oven, controlling the temperature to be 170-180°C, and melting the hot melt adhesive powder to produce adhesiveness and adhering the mesh fabric and the non-woven fabric together, thus obtaining the base fabric B.
   (3) Tufting artificial yarn on the base fabric A (the mesh surface faces downwards) according to corresponding stitch size spacing and row spacing to obtain semi-finished turf, making the base fabric B having identical size and the semi-finished turf pass through the heating roller together in a mode that mesh surfaces are attached, controlling the transmission speed to be 3m/min, and controlling the temperature to be 180-190°C, thus obtaining the recyclable artificial turf with the publication number of CN104727202A after cooling and shaping.
4. Detection of strength of artificial turf: testing the tensile breaking force of the bottom back according to the method specified in BS EN12228:2002, and detecting the withdrawal force of the artificial yarn according to the ISO4919-1978 standard required by FIFA.

### Embodiment 1

(1) Uniformly spreading PE hot melt adhesive powder on 200g/m² of PP single woven fabric according to the powder spreading amount of 80g/m², heating by an oven, controlling the temperature to be 130-140°C, melting the hot melt adhesive powder to produce adhesiveness and adhering same to the woven fabric, and cooling and shaping, thus preparing the base fabric.
(2) Tufting artificial yarn on the base fabric to prepare semi-finished artificial turf (the surface with hot melt adhesive powder is used as a bottom surface), heating the bottom surface of the semi-finished product by a heating roller, controlling the temperature to be 150-160°C, melting the root of the artificial yarn and the hot melt adhesive powder and adhering them together, and cooling and shaping, thus obtaining the completely recyclable artificial turf.
(3) Testing the withdrawal force of the artificial yarn and the tensile breaking force of the bottom back of the artificial turf. See Table 1 for the result.

### Embodiment 2

(1) Uniformly spreading PE hot melt adhesive powder on 150g/m² of PP single woven fabric according to the powder spreading amount of 120g/m², heating by an oven, controlling the temperature to be 130-140°C, melting the hot melt adhesive powder to produce adhesiveness and adhering same to the woven fabric, and cooling and shaping, thus preparing the base fabric.
(2) Tufting artificial yarn on the base fabric to prepare semi-finished artificial turf (the surface with hot melt adhesive powder is used as a bottom surface), heating the bottom surface of the semi-finished product by a heating roller, controlling the temperature to be 150-160°C, melting the root of the artificial yarn and the hot melt adhesive powder and adhering them together, and cooling and shaping, thus preparing the completely recyclable artificial turf.
(3) Testing the withdrawal force of the artificial yarn and the tensile breaking force of the bottom back of the artificial turf. See Table 1 for the result.

### Embodiment 3

(1) Uniformly spreading PE hot melt adhesive powder on 135g/m² of PP single woven fabric according to the powder spreading amount of 160g/m², heating by an oven, controlling the temperature to be 130-140°C, melting the hot melt adhesive powder to produce adhesiveness and adhering same to the woven fabric, and cooling and shaping, thus preparing the base fabric.
(2) Tufting artificial yarn on the base fabric to prepare semi-finished artificial turf (the surface with hot melt adhesive powder is used as a bottom surface), heating the bottom surface of the semi-finished product by a heating roller, controlling the temperature to be 150-160°C, melting the root of the artificial yarn and the hot melt adhesive powder and adhering them together, and cooling and shaping, thus preparing the completely recyclable artificial turf.
(3) Testing the withdrawal force of the artificial yarn and the tensile breaking force of the bottom back of the artificial turf. See Table 1 for the result.

### Embodiment 4

(1) Tufting artificial yarn on 300g/m² of PET single woven fabric to prepare semi-finished artificial turf.
(2) Heating the bottom surface of the semi-finished product by an oven, controlling the temperature to be 160-170°C, melting the root of the artificial yarn to produce adhesiveness and adhering same to the base fabric, and cooling and shaping, thus preparing the completely recyclable artificial turf.
(3) Testing the withdrawal force of the artificial yarn and the tensile breaking force of the bottom back of the artificial turf. See Table 1 for the result.

### Embodiment 5

(1) Uniformly spreading EVA hot melt adhesive powder on 250g/m² of PET single woven fabric according to the powder spreading amount of 120g/m², heating by an oven, controlling the temperature to be 120-130°C, melting the hot melt adhesive powder to produce adhesiveness and adhering same to the woven fabric, and cooling and shaping, thus preparing the base fabric.
(2) Tufting artificial yarn on the base fabric to prepare semi-finished artificial turf (the surface with hot melt adhesive powder is used as a bottom surface), heating the bottom surface of the semi-finished product by an oven, controlling the heating temperature to be 160-170°C, melting the root of the artificial yarn and the hot melt adhesive powder and adhering them together, and cooling and shaping, thus preparing the completely recyclable artificial turf.
(3) Testing the withdrawal force of the artificial yarn and the tensile breaking force of the bottom back of the artificial turf. See Table 1 for the result.

### Embodiment 6

(1) Uniformly spreading TPU hot melt adhesive powder on 200g/m² of PET single woven fabric according to the powder spreading amount of 120g/m², heating by an oven, controlling the temperature to be 130-140°C, melting the hot melt adhesive powder to produce adhesiveness and adhering same to the woven fabric, and cooling and shaping, thus preparing the base fabric.
(2) Tufting artificial yarn on the base fabric to prepare semi-finished artificial turf (the surface with hot melt adhesive powder is used as a bottom surface), heating the bottom surface of the semi-finished product by an oven, controlling the heating temperature to be 160-170°C, melting the root of the artificial yarn and the hot melt adhesive powder and adhering them together, and cooling and shaping, thus preparing the completely recyclable artificial turf.
(3) Testing the withdrawal force of the artificial yarn and the tensile breaking force of the bottom back of the artificial turf. See Table 1 for the result.

### Embodiment 7

(1) Uniformly spreading mixed PE and EVA hot melt adhesive powder on 150g/m² of PET single woven fabric according to the powder spreading amount of 120g/m², heating by an oven, controlling the temperature to be 130-140°C, melting the hot melt adhesive powder to produce adhesiveness and adhering same to the woven fabric, and cooling and shaping, thus preparing the base fabric.
(2) Tufting artificial yarn on the base fabric to prepare semi-finished artificial turf (the surface with hot melt adhesive powder is used as a bottom surface), heating the bottom surface of the semi-finished product by an oven, controlling the heating temperature to be 160-170°C, melting the root of the artificial yarn and the hot melt adhesive powder and adhering them together, and cooling and shaping, thus preparing the completely recyclable artificial turf.
(3) Testing the withdrawal force of the artificial yarn and the tensile breaking force of the bottom back of the artificial turf. See Table 1 for the result.

### Embodiment 8

(1) Uniformly spreading EVA hot melt adhesive powder on PP compound woven fabric (120g/m² of PP single woven fabric + 80g/m² of PET filament fiber) according to the powder spreading amount of 120g/m², heating by an oven, controlling the temperature to be 120-130°C, melting the hot melt adhesive powder to produce adhesiveness and adhering same to the PP compound woven fabric, and cooling and shaping, thus preparing the base fabric.
(2) Tufting artificial yarn on the base fabric to prepare semi-finished artificial turf (the surface with hot melt adhesive powder is used as a bottom surface), heating the bottom surface of the semi-finished product by an oven, controlling the heating temperature to be 160-170°C, melting the root of the artificial yarn and the hot melt adhesive powder and adhering them together, and cooling and shaping, thus preparing the completely recyclable artificial turf.
(3) Testing the withdrawal force of the artificial yarn and the tensile breaking force of the bottom back of the artificial turf. See Table 1 for the result.

### Embodiment 9

(1) Uniformly spreading EVA hot melt adhesive powder on PET compound woven fabric (180g/m² of PET single woven fabric + 60g/m² of PET staple fiber) according to the powder spreading amount of 120g/m², heating by an oven, controlling the temperature to be 120-130°C, melting the hot melt adhesive powder to produce adhesiveness and adhering same to the PET compound woven fabric, and cooling and shaping, thus preparing the base fabric.
(2) Tufting artificial yarn on the base fabric to prepare semi-finished artificial turf (the surface with hot melt adhesive powder is used as a bottom surface), heating the bottom surface of the semi-finished product by an oven, controlling the heating temperature to be 160-170°C, melting the root of the artificial yarn and the hot melt adhesive powder and adhering them together, and cooling and shaping, thus preparing the completely recyclable artificial turf.
(3) Testing the withdrawal force of the artificial yarn and the tensile breaking force of the bottom back of the artificial turf. See Table 1 for the result.

### Embodiment 10

(1) Attaching 100g/m² of PP single woven fabric and 120g/m² of PET mesh fabric which have identical breadth together, uniformly spreading PE hot melt adhesive powder on the surface of the mesh fabric according to the powder spreading amount of 120g/m², heating the surface of the mesh fabric by a heating roller, controlling the temperature to be 135-145 °C, melting the hot melt adhesive powder to produce adhesiveness and adhering the PP single woven fabric and the PET mesh fabric together, and cooling and shaping, thus preparing the base fabric.
(2) Tufting artificial yarn on the base fabric to prepare semi-finished artificial turf (the surface with hot melt adhesive powder is used as a bottom surface), heating the bottom surface of the semi-finished product by an oven, controlling the heating temperature to be 160-170°C, melting the root of the artificial yarn and the hot melt adhesive powder and adhering them together, and cooling and shaping, thus preparing the completely recyclable artificial turf.
(3) Testing the withdrawal force of the artificial yarn and the tensile breaking force of the bottom back of the artificial turf. See Table 1 for the result.

### Embodiment 11

(1) Attaching 300g/m² of PET single woven fabric and 60g/m² of PET mesh fabric which have identical breadth together, uniformly spreading PE hot melt adhesive powder on the surface of the mesh fabric according to the powder spreading amount of 120g/m², heating the surface of the mesh fabric by a heating roller, controlling the temperature to be 135-145 °C, melting the hot melt adhesive powder to produce adhesiveness and adhering the PET single woven fabric and the PET mesh fabric together, and cooling and shaping, thus preparing the base fabric.
(2) Tufting artificial yarn on the base fabric to prepare semi-finished artificial turf (the surface with hot melt adhesive powder is used as a bottom surface), heating the bottom surface of the semi-finished product by an oven, controlling the heating temperature to be 160-170°C, melting the root of the artificial yarn and the hot melt adhesive powder and adhering them together, and cooling and shaping, thus preparing the completely recyclable artificial turf.
(3) Testing the withdrawal force of the artificial yarn and the tensile breaking force of the bottom back of the artificial turf. See Table 1 for the result.

### Embodiment 12

(1) Uniformly spreading PE hot melt adhesive powder on 250g/m² of PET single woven fabric according to the powder spreading amount of 120g/m², heating by an oven to melt the hot melt adhesive powder, controlling the temperature to be 135-145 °C, taking out the PET single woven fabric from the oven and then covering 100g/m² of PET mesh fabric having identical breadth on same immediately, adhering the mesh fabric to the hot melt adhesive powder not solidified under the action of the pressure of pressing roller and then combining same with the PET single woven fabric, and cooling and shaping, thus preparing the base fabric.
(2) Tufting artificial yarn on the base fabric to prepare semi-finished artificial turf (the surface with hot melt adhesive powder is used as a bottom surface), heating the bottom surface of the semi-finished product by an oven, controlling the heating temperature to be 160-170°C, melting the root of the artificial yarn and the hot melt adhesive powder and adhering them together, and cooling and shaping, thus preparing the completely recyclable artificial turf.
(3) Testing the withdrawal force of the artificial yarn and the tensile breaking force of the bottom back of the artificial turf. See Table 1 for the result.

### Embodiment 13

(1) Uniformly spreading PE hot melt adhesive powder on 200g/m² of PET single woven fabric according to the powder spreading amount of 120g/m², heating by an oven to melt the hot melt adhesive powder, controlling the temperature to be 135-145 °C, and cooling and shaping for use.
(2) Taking 150g/m² of PET mesh fabric which have identical breadth to tuft artificial yarn on a tufting machine together with the above-mentioned woven fabric, preparing semi-finished artificial turf (the surface of the mesh fabric as a bottom surface), heating the bottom surface of the semi-finished product by an oven, controlling the heating temperature to be 160-170°C, melting the root of the artificial yarn and the hot melt adhesive powder, adhering the mesh fabric and the base fabric together, and cooling and shaping, thus preparing the completely recyclable artificial turf.
(3) Testing the withdrawal force of the artificial yarn and the tensile breaking force of the bottom back of the artificial turf. See Table 1 for the result.

### Embodiment 14

(1) Attaching PP compound woven fabric (120g/m² of PP single woven fabric + 120g/m² of polyester filament fiber) and 80g/m² of PET mesh fabric which have identical breadth together, uniformly spreading PE hot melt adhesive powder on the surface of the mesh fabric according to the powder spreading amount of 120g/m², heating the surface of the mesh fabric by a heating roller, controlling the temperature to be 135-145 °C, melting the hot melt adhesive powder to produce adhesiveness and adhering the PP compound woven fabric and the PET mesh fabric together, and cooling and shaping, thus preparing the base fabric.
(2) Tufting artificial yarn on the base fabric to prepare semi-finished artificial turf (the surface with hot melt adhesive powder is used as a bottom surface), heating the bottom surface of the semi-finished product by an oven, controlling the heating temperature to be 160-170°C, melting the root of the artificial yarn and the hot melt adhesive powder and adhering them together, and cooling and shaping, thus preparing the completely recyclable artificial turf.
(3) Testing the withdrawal force of the artificial yarn and the tensile breaking force of the bottom back of the artificial turf. See Table 1 for the result.

### Embodiment 15

(1) Attaching PET compound woven fabric (200g/m² of PET single woven fabric + 120g/m² of polyester staple fiber) and 50g/m² of PET mesh fabric which have identical breadth together, uniformly spreading PE hot melt adhesive powder on the surface of the mesh fabric according to the powder spreading amount of 120g/m², heating the surface of the mesh fabric by a heating roller, controlling the temperature to be 135-145 °C, melting the hot melt adhesive powder to produce adhesiveness and adhering the PET compound woven fabric and the PET mesh fabric together, and cooling and shaping, thus preparing the base fabric.
(2) Tufting artificial yarn on the base fabric to prepare semi-finished artificial turf (the surface with hot melt adhesive powder is used as a bottom surface), heating the bottom surface of the semi-finished product by an oven, controlling the heating temperature to be 160-170°C, melting the root of the artificial yarn and the hot melt adhesive powder and adhering them together, and cooling and shaping, thus preparing the completely recyclable artificial turf.
(3) Testing the withdrawal force of the artificial yarn and the tensile breaking force of the bottom back of the artificial turf. See Table 1 for the result.

### Embodiment 16

(1) Uniformly spreading EVA hot melt adhesive powder on 60g/m² of PET non-woven fabric according to the powder spreading amount of 90g/m², heating by an oven, controlling the temperature to be 140-150°C, melting the hot melt adhesive powder to produce adhesiveness and adhering same to the PET non-woven fabric, and cooling and shaping for use.
(2) Tufting artificial yarn on the base fabric of 135g/m² of PP single woven fabric to prepare semi-finished artificial turf, attaching the prepared PET non-woven fabric onto the bottom surface of the semi-finished product (the surface with hot melt adhesive powder of the PET non-woven fabric is connected with the root of the artificial yarn), heating the surface without hot melt adhesive powder of the PET non-woven fabric by a heating roller, controlling the heating temperature to be 180-190°C, melting the root of the artificial yarn and the hot melt adhesive powder, adhering the PET non-woven fabric and the root of the artificial yarn and the base fabric together, and cooling and shaping, thus preparing the completely recyclable artificial turf.
(3) Testing the withdrawal force of the artificial yarn and the tensile breaking force of the bottom back of the artificial turf. See Table 1 for the result.

### Embodiment 17

(1) Uniformly spreading EVA hot melt adhesive powder on 220g/m² of PET single woven fabric according to the powder spreading amount of 90g/m², heating by an oven, controlling the temperature to be 140-150°C, melting the hot melt adhesive powder to produce adhesiveness and adhering same to the PET single woven fabric, and cooling and shaping, thus preparing the base fabric.
(2) Uniformly spreading EVA hot melt adhesive powder on 120g/m² of PET non-woven fabric according to the powder spreading amount of 90g/m², heating by an oven, controlling the temperature to be 140-150°C, melting the hot melt adhesive powder to produce adhesiveness and adhering same to the PET non-woven fabric, and cooling and shaping for use.
(3) Tufting artificial yarn on the base fabric to prepare semi-finished artificial turf (the surface with hot melt adhesive powder is used as a bottom surface), attaching the prepared PET non-woven fabric onto the bottom surface of the semi-finished product (the surface with hot melt adhesive powder of the PET non-woven fabric is connected with the root of the artificial yarn), heating the surface without hot melt adhesive powder of the PET non-woven fabric by a heating roller, controlling the heating temperature to be 180-190°C, melting the root of the artificial yarn and the hot melt adhesive powder, adhering the PET non-woven fabric and the root of the artificial yarn and the base fabric together, and cooling and shaping, thus preparing the completely recyclable artificial turf.
(4) Testing the withdrawal force of the artificial yarn and the tensile breaking force of the bottom back of the artificial turf. See Table 1 for the result.

### Embodiment 18

(1) Uniformly spreading TPU hot melt adhesive powder on PP compound woven fabric (120g/m² of PP single woven fabric + 150g/m² of polyester filament fiber) according to the powder spreading amount of 150g/m², heating by an oven, controlling the temperature to be 140-150 °C , melting the hot melt adhesive powder to produce adhesiveness and adhering same to the woven fabric, and cooling and shaping, thus preparing the base fabric.
(2) Uniformly spreading TPU hot melt adhesive powder on 150g/m² of PET non-woven fabric according to the powder spreading amount of 150g/m², heating by an oven, controlling the temperature to be 140-150°C, melting the hot melt adhesive powder to produce adhesiveness and adhering same to the PET non-woven fabric, and cooling and shaping for use.
(3) Tufting artificial yarn on the base fabric to prepare semi-finished artificial turf (the surface with hot melt adhesive powder is used as a bottom surface), attaching the prepared PET non-woven fabric onto the bottom surface of the semi-finished product (the surface with hot melt adhesive powder of the PET non-woven fabric is connected with the root of the artificial yarn), heating the surface without hot melt adhesive powder of the PET non-woven fabric by a heating roller, controlling the heating temperature to be 180-190°C, melting the root of the artificial yarn and the hot melt adhesive powder, adhering the PET non-woven fabric and the root of the artificial yarn and the base fabric together, and cooling and shaping, thus preparing the completely recyclable artificial turf.
(4) Testing the withdrawal force of the artificial yarn and the tensile breaking force of the bottom back of the artificial turf. See Table 1 for the result.

### Embodiment 19

(1) Uniformly spreading TPU hot melt adhesive powder on PET compound woven fabric (180g/m² of PET single woven fabric + 100g/m² of polyester staple fiber) according to the powder spreading amount of 130g/m², heating by an oven, controlling the temperature to be 140-150 °C , melting the hot melt adhesive powder to produce adhesiveness and adhering same to the woven fabric, and cooling and shaping, thus preparing the base fabric.
(2) Uniformly spreading TPU hot melt adhesive powder on PET compound non-woven fabric (150g/m² of PET non-woven fabric + 80g/m² of PET mesh fabric) according to the powder spreading amount of 130g/m², heating by an oven, controlling the temperature to be 140-150 °C , melting the hot melt adhesive powder to produce adhesiveness and adhering same to the PET compound non-woven fabric, and cooling and shaping for use.
(3) Tufting artificial yarn on the base fabric to prepare semi-finished artificial turf (the surface with hot melt adhesive powder is used as a bottom surface), attaching the prepared PET compound non-woven fabric onto the bottom surface of the semi-finished product (the surface with hot melt adhesive powder of the PET compound non-woven fabric is connected with the root of the artificial yarn), heating the surface without hot melt adhesive powder of the PET compound non-woven fabric by a heating roller, controlling the heating temperature to be 180-190°C, melting the root of the artificial yarn and the hot melt adhesive powder, adhering the PET compound non-woven fabric and the root of the artificial yarn and the base fabric together, and cooling and shaping, thus preparing the completely recyclable artificial turf.
(4) Testing the withdrawal force of the artificial yarn and the tensile breaking force of the bottom back of the artificial turf. See Table 1 for the result.

### Embodiment 20

(1) Attaching 120g/m² of PP single woven fabric and 70g/m² of PET mesh fabric which have identical breadth together, uniformly spreading PE hot melt adhesive powder on the surface of the mesh fabric according to the powder spreading amount of 110g/m², heating the surface of the mesh fabric by a heating roller, controlling the temperature to be 135-145 °C, melting the hot melt adhesive powder to produce adhesiveness and adhering the PP single woven fabric and the PET mesh fabric together, and cooling and shaping, thus preparing the base fabric.
(2) Uniformly spreading PE hot melt adhesive powder on PET compound non-woven fabric (120g/m² of PET non-woven fabric + 100g/m² of PET mesh fabric) according to the powder spreading amount of 110g/m², heating by an oven, controlling the temperature to be 140-150°C, melting the hot melt adhesive powder to produce adhesiveness and adhering same to the PET compound non-woven fabric, and cooling and shaping for use.
(3) Tufting artificial yarn on the base fabric to prepare semi-finished artificial turf (the surface with hot melt adhesive powder is used as a bottom surface), attaching the prepared PET compound non-woven fabric onto the bottom surface of the semi-finished product (the surface with hot melt adhesive powder of the PET compound non-woven fabric is connected with the root of the artificial yarn), heating the surface without hot melt adhesive powder of the PET compound non-woven fabric by a heating roller, controlling the heating temperature to be 180-190°C, melting the root of the artificial yarn and the hot melt adhesive powder, adhering the PET compound non-woven fabric and the root of the artificial yarn and the base fabric together, and cooling and shaping, thus preparing the completely recyclable artificial turf.
(4) Testing the withdrawal force of the artificial yarn and the tensile breaking force of the bottom back of the artificial turf. See Table 1 for the result.

### Embodiment 21

(1) Attaching PP compound woven fabric (110g/m² of PP single woven fabric + 110g/m² of polyester filament fiber) and 90g/m² of PET mesh fabric which have identical breadth together, uniformly spreading PE hot melt adhesive powder on the surface of the mesh fabric according to the powder spreading amount of 110g/m², heating the surface of the mesh fabric by a heating roller, controlling the temperature to be 135-145 °C, melting the hot melt adhesive powder to produce adhesiveness and adhering the PP compound woven fabric and the PET mesh fabric together, and cooling and shaping, thus preparing the base fabric.
(2) Uniformly spreading PE hot melt adhesive powder on PET compound non-woven fabric (100g/m² of PET non-woven fabric + 130g/m² of PET mesh fabric) according to the powder spreading amount of 110g/m², heating by an oven, controlling the temperature to be 140-150°C, melting the hot melt adhesive powder to produce adhesiveness and adhering same to the PET compound non-woven fabric, and cooling and shaping for use.
(3) Tufting artificial yarn on the base fabric to prepare semi-finished artificial turf (the surface with hot melt adhesive powder is used as a bottom surface), attaching the prepared PET compound non-woven fabric onto the bottom surface of the semi-finished product (the surface with hot melt adhesive powder of the PET compound non-woven fabric is connected with the root of the artificial yarn), heating the surface without hot melt adhesive powder of the PET compound non-woven fabric by a heating roller, controlling the heating temperature to be 180-190°C, melting the root of the artificial yarn and the hot melt adhesive powder, adhering the PET compound non-woven fabric and the root of the artificial yarn and the base fabric together, and cooling and shaping, thus preparing the completely recyclable artificial turf.
(4) Testing the withdrawal force of the artificial yarn and the tensile breaking force of the bottom back of the artificial turf. See Table 1 for the result.

### Embodiment 22

(1) Attaching PET compound woven fabric (180g/m² of PET single woven fabric + 110g/m² of polyester staple fiber) and 70g/m² of PET mesh fabric which have identical breadth together, uniformly spreading PE hot melt adhesive powder on the surface of the mesh fabric according to the powder spreading amount of 110g/m², heating the surface of the mesh fabric by a heating roller, controlling the temperature to be 135-145 °C, melting the hot melt adhesive powder to produce adhesiveness and adhering the PP compound woven fabric and the PET mesh fabric together, and cooling and shaping, thus preparing the base fabric.
(2) Uniformly spreading PE hot melt adhesive powder on PET compound non-woven fabric (80g/m² of PET non-woven fabric + 150g/m² of PET mesh fabric) according to the powder spreading amount of 110g/m², heating by an oven, controlling the temperature to be 140-150°C, melting the hot melt adhesive powder to produce adhesiveness and adhering same to the PET compound non-woven fabric, and cooling and shaping for use.
(3) Tufting artificial yarn on the base fabric to prepare semi-finished artificial turf (the surface with hot melt adhesive powder is used as a bottom surface), attaching the prepared PET compound non-woven fabric onto the bottom surface of the semi-finished product (the surface with hot melt adhesive powder of the PET compound non-woven fabric is connected with the root of the artificial yarn), heating the bottom surface of the semi-finished product by an oven, controlling the heating temperature to be 170-180°C, melting the root of the artificial yarn and the hot melt adhesive powder, adhering the PET compound non-woven fabric and the root of the artificial yarn and the base fabric together, and cooling and shaping, thus preparing the completely recyclable artificial turf.
(4) Testing the withdrawal force of the artificial yarn and the tensile breaking force of the bottom back of the artificial turf. See Table 1 for the result.

### Embodiment 23

(1) Attaching 300g/m² of PET single woven fabric and 70g/m² of PET mesh fabric which have identical breadth together, uniformly spreading PE hot melt adhesive powder on the surface of the mesh fabric according to the powder spreading amount of 110g/m², heating the surface of the mesh fabric by a heating roller, controlling the temperature to be 135-145 °C, melting the hot melt adhesive powder to produce adhesiveness and adhering the PET single woven fabric and the PET mesh fabric together, and cooling and shaping, thus preparing the base fabric.
(2) Uniformly spreading PE hot melt adhesive powder on PET compound non-woven fabric (80g/m² of PET non-woven fabric + 150g/m² of PET mesh fabric) according to the powder spreading amount of 110g/m², heating by an oven, controlling the temperature to be 140-150°C, melting the hot melt adhesive powder to produce adhesiveness and adhering same to the PET compound non-woven fabric, and cooling and shaping for use.
(3) Tufting artificial yarn on the base fabric to prepare semi-finished artificial turf (the surface with hot melt adhesive powder is used as a bottom surface), attaching the prepared PET compound non-woven fabric onto the bottom surface of the semi-finished product (the surface with hot melt adhesive powder of the PET compound non-woven fabric is connected with the root of the artificial yarn), heating the bottom surface of the semi-finished product by an oven, controlling the heating temperature to be 170-180°C, melting the root of the artificial yarn and the hot melt adhesive powder, adhering the PET compound non-woven fabric and the root of the artificial yarn and the base fabric together, and cooling and shaping, thus preparing the completely recyclable artificial turf.
(4) Testing the withdrawal force of the artificial yarn and the tensile breaking force of the bottom back of the artificial turf. See Table 1 for the result.

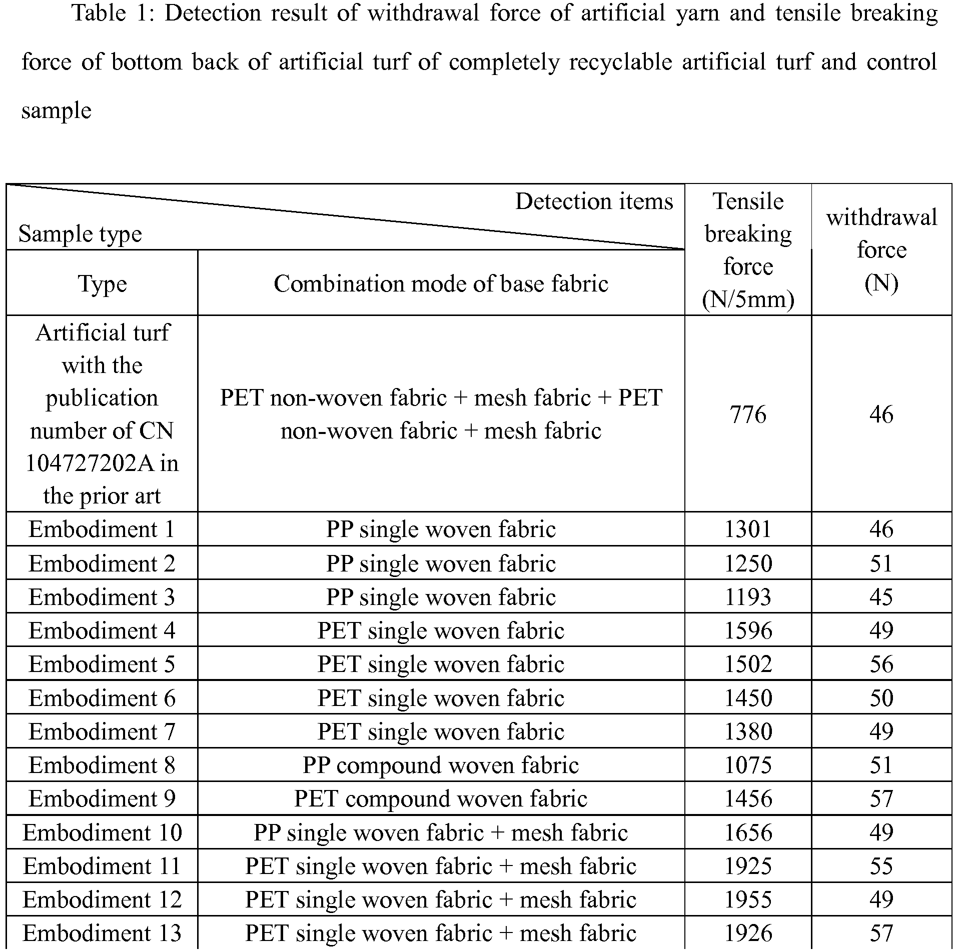

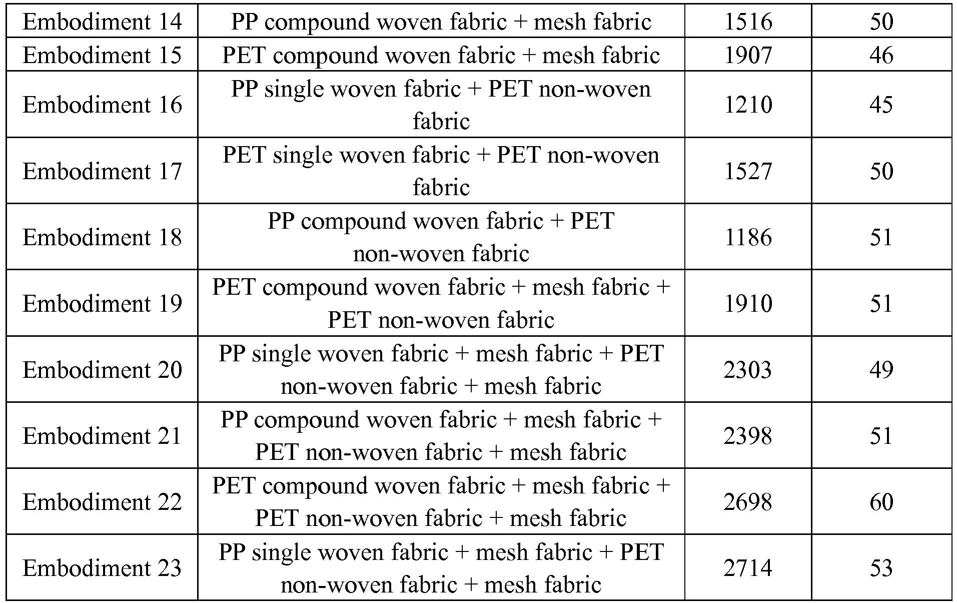

**Table 2: Artificial yarn tufting comparison between the completely recyclable artificial turf of the present invention and the control sample (artificial turf with the publication number of CN104727202A in the prior art):**

| | Appearance of semi-finished product | Difficulty level of tufting | Situation for base fabric to fix yarn |
|---|---|---|---|
| Artificial turf with the publication number of CN104727202A in the prior art | Artificial yarn are jagged in height | Difficult | Base fabric has poor capability to fix yarn, and there is an obvious phenomenon of falling grass |
| Artificial turf of the present invention | Artificial yarn are consistent in height, and the surface is neat | Easy | There is no phenomenon of falling grass substantially |

It can be known from the detection result that the prepared completely recyclable artificial turf of the present invention has obvious advantages in tufting efficiency and artificial turf strength.

## Claims

1. A completely recyclable artificial turf, comprising artificial yarn and base fabric, **characterized in that** the base fabric includes woven fabric, the artificial yarn is tufted on the base fabric including woven fabric, the root of the artificial yarn is melted or locally melted, and the artificial yarn is integrated with the base fabric into a whole after cooling and shaping, wherein the material of the artificial yarn has a melting point lower than that of the material of the base fabric.

2. The completely recyclable artificial turf according to claim 1, **characterized in that** the root of the artificial yarn is tufted artificial yarn located below the bottom surface of the base fabric.

3. The completely recyclable artificial turf according to claim 1, **characterized in that** the root of the artificial yarn is melted or locally melted in a thermal compounding manner.

4. The completely recyclable artificial turf according to claim 1, **characterized in that** the woven fabric is single woven fabric or compound woven fabric.

5. The completely recyclable artificial turf according to claim 1, **characterized in that** for the base fabric, before the artificial yarn is tufted, hot melt adhesive powder is spread on the bottom surface of the base fabric through a powder spreading procedure.

6. The completely recyclable artificial turf according to claim 5, **characterized in that** the base fabric includes mesh fabric.

7. The completely recyclable artificial turf according to claim 6, **characterized in that** the material of the mesh fabric has a melting point higher than that of the material of the artificial yarn, and the mesh fabric should be heat-treated before use.

8. The completely recyclable artificial turf according to claim 7, **characterized in that** the gram weight of the mesh fabric is 50-200g/m2, and the material of the mesh fabric is polyethylene terephthalate.

9. The completely recyclable artificial turf according to claim 1, **characterized in that** an additional layer of base fabric is thermally compounded on the bottom surface of the base fabric on which the artificial yarn is tufted.

10. The completely recyclable artificial turf according to claim 9, **characterized in that** the material of the base fabric thermally compounded on the bottom surface of the base fabric on which the artificial yarn is tufted has a melting point higher than that of the material of the artificial yarn, and for the base fabric before being thermally compounded, hot melt adhesive powder is spread on one surface thereof through a powder spreading procedure.

11. The completely recyclable artificial turf according to claim 9, **characterized in that** the material of the base fabric thermally compounded on the bottom surface of the base fabric on which the artificial yarn is tufted is non-woven fabric or compound fabric of non-woven fabric and mesh fabric.

12. The completely recyclable artificial turf according to claim 11, **characterized in that** the non-woven fabric or the compound fabric of non-woven fabric and mesh fabric should be heat-treated before use.

13. The completely recyclable artificial turf according to claim 7 or 12, **characterized in that** the heat treatment method for the mesh fabric or the non-woven fabric is as follows: heating the mesh fabric or the non-woven fabric in the mode of thermal radiation by an oven or direct heating by a heating roller, controlling the heating temperature between the glass transition temperature and the melting point of the material, and completing heat treatment of the mesh fabric or the non-woven fabric after cooling and shaping.

14. The completely recyclable artificial turf according to claim 12, **characterized in that** there are two heat treatment methods for the compound fabric of non-woven fabric and mesh fabric, one method is as follows: performing heat treatment on the non-woven fabric and the mesh fabric respectively in the mode of thermal radiation by an oven or direct heating by a heating roller, controlling the heating temperature between the glass transition temperature and the melting point of the material, and thermally adhering the two together through a powder spreading procedure to form the compound fabric; and the other method is as follows: stitching the non-woven fabric and the mesh fabric together first through a stitching process, then heating the compound fabric in the mode of thermal radiation by an oven or direct heating by a heating roller, controlling the heating temperature between the glass transition temperature and the melting point of the material, and completing heat treatment after cooling and shaping.

15. The completely recyclable artificial turf according to claim 11 or 14, **characterized in that** the gram weight of the non-woven fabric is 50-150g/m², the gram weight of the mesh fabric is 80-150g/m², and the material of the non-woven fabric or the mesh fabric is polyethylene terephthalate.

16. The completely recyclable artificial turf according to claim 15, **characterized in that** when the material of the non-woven fabric or the mesh fabric is polyethylene terephthalate, the heating temperature thereof during heat treatment ranges from 170°C to 200°C.

17. The completely recyclable artificial turf according to claim 5 or 10, **characterized in that** the material of the hot melt adhesive powder has a melting point lower than that of the material of the base fabric.

18. The completely recyclable artificial turf according to claim 17, **characterized in that** the hot melt adhesive powder is prepared of one of PE, EVA and TPU or a combination thereof, and the power spreading amount of the hot melt adhesive powder is 60-150g/m².

19. A preparation method for the completely recyclable artificial turf according to any one of claims 1-18, **characterized by** comprising the following steps:
(1) tufting artificial yarn on base fabric including woven fabric according to specifications to prepare same into a semi-finished product; and
(2) heating the bottom of the semi-finished product through a thermal compounding procedure, so that the root of the artificial yarn is melted or locally melted, and the artificial yarn is integrated with the base fabric into a whole after cooling and shaping, thus obtaining the completely recyclable artificial turf.

20. The preparation method for the completely recyclable artificial turf according to claim 19, **characterized by** comprising the following steps:
(1) spreading hot melt adhesive powder on one surface of the base fabric including woven fabric through a powder spreading procedure;
(2) tufting artificial yarn on the base fabric including woven fabric according to specifications to prepare same into a semi-finished product; and
(3) heating the bottom of the semi-finished product through a thermal compounding procedure, so that the root of the artificial yarn is melted or locally melted and is melted with the hot melt adhesive powder, and the artificial yarn is integrated with the base fabric into a whole after cooling and shaping, thus obtaining the completely recyclable artificial turf.

21. The preparation method for the completely recyclable artificial turf according to claim 20, **characterized by** comprising the following steps:
(1) spreading powder on the woven fabric and the mesh fabric simultaneously through a powder spreading procedure to prepare base fabric, or spreading powder on the woven fabric first and then combining the woven fabric with the mesh fabric to prepare base fabric;
(2) tufting artificial yarn on the base fabric according to specifications to prepare same into a semi-finished product; and
(3) heating the bottom of the semi-finished product through a thermal compounding procedure, so that the root of the artificial yarn is melted or locally melted and is melted with the hot melt adhesive powder, and the artificial yarn is integrated with the base fabric into a whole after cooling and shaping, thus obtaining the completely recyclable artificial turf.

22. The preparation method for the completely recyclable artificial turf according to claim 21, **characterized by** comprising the following steps:
(1) spreading a layer of hot melt adhesive powder on one surface of the non-woven fabric or the compound fabric of non-woven fabric and mesh fabric through a powder spreading procedure, to prepare bottom-layer base fabric;
(2) spreading powder on the woven fabric and the mesh fabric simultaneously through a powder spreading procedure to prepare base fabric, or spreading powder on the woven fabric first and then combining the woven fabric with the mesh fabric to prepare base fabric for tufting;
(3) tufting artificial yarn on the base fabric according to specifications to prepare same into a semi-finished product, and covering the other base fabric on which powder is spread on the bottom surface of the semi-finished product, the surface with hot melt adhesive powder of the base fabric coming into contact with the grass root; and
(4) heating the surface without hot melt adhesive powder of the bottom-layer base fabric through a thermal compounding procedure, so that the root of the artificial yarn is melted or locally melted and is adhered together with the melted hot melt adhesive powder, and the artificial yarn is integrated with the two layers of base fabric into a whole after cooling and shaping, thus obtaining the completely recyclable artificial turf.

23. The preparation method for the completely recyclable artificial turf according to claim 22, **characterized in that** the mesh fabric, the non-woven fabric or the compound fabric of the non-woven fabric and the mesh fabric should be heat-treated before use, wherein the heat treatment method for the mesh fabric or the non-woven fabric is as follows: heating the mesh fabric or the non-woven fabric in the mode of thermal radiation by an oven or direct heating by a heating roller, controlling the heating temperature between the glass transition temperature and the melting point of the material, and completing heat treatment of the mesh fabric or the non-woven fabric after cooling and shaping; there are two heat treatment methods for the compound fabric of the non-woven fabric and the mesh fabric, one method is as follows: performing heat treatment on the non-woven fabric and the mesh fabric respectively in the mode of thermal radiation by an oven or direct heating by a heating roller, controlling the heating temperature between the glass transition temperature and the melting point of the material, and thermally adhering the two together through a powder spreading procedure to form compound fabric; and the other method is as follows: stitching the non-woven fabric and the mesh fabric together first through a stitching process, then heating the compound fabric in the mode of thermal radiation by an oven or direct heating by a heating roller, controlling the heating temperature between the glass transition temperature and the melting point of the material, and completing heat treatment after cooling and shaping.

24. The preparation method for the completely recyclable artificial turf according to claim 23, **characterized in that** when the material of the non-woven fabric or the mesh fabric is polyethylene terephthalate, the heating temperature during heat treatment ranges from 170°C to 200°C.

25. The preparation method for the completely recyclable artificial turf according to claim 20, 21 or 22, **characterized in that** the powder spreading procedure is performed by heating the hot melt adhesive powder in the mode of thermal radiation by an oven or direct heating by a heating roller, so that the hot melt adhesive powder is melted to produce adhesiveness and then is adhered to the surface of the woven fabric or the non-woven fabric, or the woven fabric and mesh fabric, or the non-woven fabric and the mesh fabric are adhered together, to form a whole after cooling and shaping.

26. The preparation method for the completely recyclable artificial turf according to claim 19, 20, 21 or 22, **characterized in that** the thermal compounding procedure is performed by heating the root of the artificial yarn or the surface without hot melt adhesive powder of the base fabric in the mode of thermal radiation by an oven or direct heating by a heating roller, so that the root of the artificial yarn and the hot melt adhesive powder are melted to produce adhesiveness and then are combined with each other, and the artificial yarn is firmly fixed onto the base fabric through cooling and shaping.
